# EUROPÄISCHE PATENTANMELDUNG

(11) **EP 2 581 971 A1**
(43) Veröffentlichungstag der Anmeldung: **17.04.2013**
(21) Anmeldenummer: 12187930.8
(22) Anmeldetag: 10.10.2012
(51) Int. Cl.: H01M 4/90, B01J 23/42, B01J 23/46, B01J 37/34, C01B 7/01, B01J 37/03

(54) **Katalysatorbeschichtung und Verfahren zu ihrer Herstellung**

(30) Priorität: 11.10.2011 DE 102011084284
(71) Anmelder: Bayer Intellectual Property GmbH, 40789 Monheim (DE)
(72) Erfinder: Kintrup, Jürgen, 51373 Leverkusen (DE); Bulan, Andreas, 40764 Langenfeld (DE); Trieu, Vinh, 66130 Saarbrücken (DE); Natter, Harald, 66117 Saarbrücken (DE); Hempelmann, Rolf, 66386 St. Ingbert (DE)
(74) Vertreter: BIP Patents

(57) **Zusammenfassung**

Es wird eine verbesserte Katalysatorbeschichtung mit elektrokatalytisch aktiven Komponenten auf Basis von Rutheniumoxid und Titanoxid, insbesondere für den Einsatz in der ChloralkaliElektrolyse, beschrieben. Es wird ferner ein Herstellungsverfahren für die Katalysatorbeschichtung und eine neue Elektrode beschrieben.

## Beschreibung

Die Erfindung betrifft eine verbesserte Katalysatorbeschichtung mit elektrokatalytisch aktiven Komponenten auf Basis von Rutheniumoxid und Titanoxid, insbesondere für den Einsatz in der Chloralkali-Elektrolyse zur Herstellung von Chlor. Die Erfindung betrifft ferner ein Herstellungsverfahren für die Katalysatorbeschichtung und eine neue Elektrode.

Die vorliegende Erfindung beschreibt im speziellen ein Verfahren zur elektrochemischen Abscheidung von TiO₂-RuO₂-Mischoxid-Schichten auf einem metallischen Träger sowie deren Verwendung als Elektrokatalysatoren in der Chlorelektrolyse.

Die Erfindung geht aus von an sich bekannten Elektroden und Elektrodenbeschichtungen, die üblicherweise einen elektrisch leitenden Träger beschichtet mit einer katalytisch aktiven Komponente, insbesondere mit einer Katalysatorbeschichtung mit elektrokatalytisch aktiven Komponenten auf Basis von Rutheniumoxid und Titanoxid.

Mischoxid-Schichten aus Titandioxid (TiO₂) und Rutheniumdioxid (RuO₂), die auf Titan geträgert werden, sind seit langem als stabile Elektrokatalysatoren für die Chlorelektrolyse bekannt.

Konventionell werden diese über eine thermische Zersetzung von wässrigen oder organischen Ruthenium- und Titan-Salzlösungen hergestellt, welche durch Eintauchen, Aufpinseln oder Sprühen auf ein Titansubstrat aufgetragen werden. Nach jedem Auftragungsschritt erfolgt eine Kalzinierung. In der Regel werden mehrere Auftragungs-/Kalzinierungsschritte benötigt, um die erforderliche Katalysatorbeladung auf der Elektrode zu erreichen. Dieser mehrstufige Prozess ist sehr aufwändig und die Vielzahl der Kalzinierungsschritte führt zu einer Verformung des Titansubstrates in Folge der thermischen Ausdehnung. Durch die damit verbundene erforderliche Nachbehandlung kann die Haftung der Beschichtung auf dem Träger Schaden nehmen. Das Titansubstrat selbst kann durch die thermische Behandlung Oxidschichten bilden, die den Ohmschen Widerstand und damit auch die Überspannung erhöhen.

Ein weiteres Verfahren zur Herstellung von TiO₂-RuO₂-Mischoxid-Schichten auf einem Titanträger ist die Sol-Gel-Synthese. Hierbei wird in der Regel eine organische Precursorlösung auf das Titan aufgetragen. Das Verfahren benötigt analog zum thermischen Zersetzungsverfahren mehrere aufwändige Kalzinierungsschritte. Ebenfalls nachteilig ist bei der Sol-Gel-Synthese der Einsatz von sehr teuren organischen Precursorsalzen.

Ein alternatives Verfahren, das eine geringere Zahl der Kalzinierungsschritte erfordert, stellt die elektrochemische Abscheidung dar. Bei der kathodischen Elektrodeposition werden Metallionen aus einer Lösung über eine elektrogenerierte Base an der Elektrode als amorphe Oxide oder Hydroxide gefällt. Durch anschließende thermische Behandlung werden die amorphen Vorstufen in kristalline Oxide überführt. Hierbei können zwei verschiedene chemische Routen unterschieden werden: die Elektrodeposition über entsprechende Peroxokomplexe und die Elektrodeposition über Hydroxokomplexe als Vorstufen. Da es sich bei diesen Vorstufen im Unterschied zu den beiden oben genannten Verfahren um feste Phasen handelt, kann in einem Depositionsschritt eine höhere Oxidbeladung auf der Elektrode erzielt werden, was die Zahl der erforderlichen Kalzinierungsschritte reduziert.

Elektrochemische Abscheideverfahren zur Darstellung von reinen TiO₂-Schichten und reinen RuO₂-Schichten sind bereits bekannt.

Die US 2010290974 (A1) beschreibt die kathodische Abscheidung von TiO₂ aus einem Elektrolyten, der Ti(III)-Ionen, Nitrat und Nitrit enthält.

P. M. Dziewonski und M. Grzeszczuk berichten in Electrochimica Acta, 2009, 54, Seiten 4045-4055 über die elektrochemische Abscheidung von reinen TiO₂-Schichten mittels Cyclovoltammetrie. Die Abscheidung erfolgt über Peroxo- und Oxalatkomplexe.

Eine anodische Elektrodeposition von reinen TiO₂-Schichten und eine kathodische Elektrodeposition von reinen RuO₂-Schichten werden von C. D. Lokhande, B.-O. Park, K.-D. Jung und O.-S. Joo in Ultramicroscopy, 2005, 105, Seiten 267-274 beschrieben.

Die Elektrodeposition von reinen RuO₂-Schichten aus wässriger Lösung wird auch in der WO2005050721 (A1) und von I. Zhitomirsky und L. Gal-Or in Material Letters, 1997, 31, Seiten 155-159 beschrieben.

Bekannt ist auch die Elektrodeposition von reinen RuO₂-Schichten über Cyclovoltammetrie, die von C.-C. Hu und K.-H. Chang in Journal of the Electrochemical Society, 1999, 146, Seiten 2465-2471 beschrieben wird. Über dieses Verfahren ist gemäß C.-C. Hu und K.-H. Chang, Electrochimica Acta, 2000, 45, Seiten 2685-2696 auch eine Codeposition von Iridiumdioxid (IrO₂) möglich.

In der CN101525760 (A) wird die Elektrodeposition von RuO₂-Schichten über eine Pulsabscheidung beschrieben.

Für die Abscheidung von TiO₂-RuO₂-Komposit-Schichten sind ebenfalls verschiedene elektrochemische Präparationsrouten bekannt.

In Material Letters, 1998, 33, Seiten 305-310 beschreibt I. Zhitomirsky die Elektrodeposition von TiO₂-RuO₂-Kompositen durch alternierende Elektrodeposition von reinen TiO₂- und reinen RuO₂-Schichten.

S. Z. Chu, S. Inoue, K. Wada und S. Hishita beschreiben in Journal ofthe Electrochemical Society, 2004, 151, Seiten C38-C44 die Elektrodeposition von TiO₂-RuO₂-Kompositen durch eine simultane Abscheidung beider Komponenten. Gemäß diesen Autoren verlaufen die jeweiligen Abscheidungsmechanismen unabhängig voneinander. TiO₂ wird über Ti-Peroxokomplexe als Vorstufe abgeschieden. Ruthenium wird als Metall abgeschieden und durch anschließende Kalzinierung in RuO₂ überführt.

L. Zhang, J. Wang, H. Zhang und W. Cai berichten in Huaxue Xuebao, 2010, 68, Seiten 590-593 über TiO₂-RuO₂-Komposite, die elektrochemisch durch kathodische Deposition von RuO₂ auf sphärischen TiO₂-Nanopartikeln erhalten wurden. Die TiO₂-Nanopartikel wurden vorher durch Spin-Coating auf Indium-Zinn-Oxid (ITO) aufgebracht.

I. Zhitomirsky beschreibt in Journal of Materials Science, 1999, 34, Seiten 2441-2447 erstmalig eine simultane elektrochemische Abscheidung von TiO₂ und RuO₂, wobei beide Komponenten als Mischoxide abgeschieden werden. Die gleiche Synthese findet sich auch in weiteren Publikationen (I. Zhitomirsky, Journal of the European Ceramic Society, 1999, 19, Seiten 2581-2587 und I. Zhitomirsky, Advances in Colloid and Interface Science, 2002, 97, Seiten 279-317).

Bei dieser Elektrosynthese wird ein Bad bestehend aus Methanol, Wasser, Ruthenium(III)chlorid (RuCl₃), Titan(IV)chlorid (TiCl₄) und Wasserstoffperoxid (H₂O₂) verwendet. Bei kathodischen Stromdichten von -20 mA/cm² werden TiO₂-RuO₂-Schichten sukzessive als Multilayer abgeschieden (gemäß I. Zhitomirsky in Journal of Materials Science, 1999, 34, Seiten 2441-2447). Die beiden Metallkomponenten werden nach I. Zhitomirsky simultan über zwei verschiedene chemische Routen abgeschieden: Titan über Peroxokomplexe und Ruthenium über Hydroxokomplexe als Vorstufe (beschrieben in Journal of Materials Science, 1999, 34, Seiten 2441-2447 und in Material Letters, 1998, 33, Seiten 305-310).

Die Abscheidung über verschiedene chemische Routen kann für die homogene Durchmischung beider Komponenten und somit auch für die Mischoxidbildung nachteilig sein. TiO₂ und RuO₂ sind zwar isomorph, lassen sich jedoch wegen ihrer unterschiedlichen physikalischen Eigenschaften (TiO₂ als Halbleiter und RuO₂ als metallischer Leiter) nicht gut verbinden. Es ist weitgehend bekannt, dass beide Oxide im Bereich von ca. 20-80 mol% Ru eine Mischungslücke aufweisen, in dessen Bereich nur metastabile Mischoxide entstehen (beschrieben von K. T. Jacob und R. Subramanian in Journal of Phase Equilibra and Diffusion, 2008, 29, Seiten 136-140). In Material Letters, 1998, 33, Seiten 305-310 schreibt I. Zhitomirsky, dass eine Phasentrennung in mehrere Rutilphasen auftritt, weil während der Synthese die Titan- und Rutheniumkomponenten über verschiedene Abscheidungsmechanismen an der Elektrode gefällt werden. Die Titankomponente wird über Peroxokomplexe als Zwischenstufe gefällt, während die Rutheniumkomponente über Hydroxozwischenstufen gefällt wird. Somit laufen beide Abscheidungsprozesse voneinander unabhängig ab. Die Nachstellung der von Zhitomirsky beschriebenen Synthese (Journal of Materials Science, 1999, 34, Seiten 2441-2447) bestätigt diese Aussage (siehe Beispiel 1b).

Eine gute Mischoxidbildung von TiO₂ und RuO₂ ist jedoch bekanntermaßen ausschlaggebend für die anodische Stabilität in der Chlorelektrolyse. Reines RuO₂ ist gegenüber anodischer Sauerstoffentwicklung, die mit der Chlorentwicklung einhergeht, korrosionsempfindlich. Erst die Mischoxidbildung von RuO₂ mit TiO₂ sorgt für eine ausreichende Stabilität. Der Effekt der Mischoxidbildung auf die Elektrodenstabilität wird von V. M. Jovanovic, A. Dekanski, P. Despotov, B. Z. Nikolic und R. T. Atanasoski in Journal of Electroanalytical Chemistry 1992, 339, Seiten 147-165 beschrieben.

Die Aufgabe der vorliegenden Erfindung besteht darin, eine verbesserte Katalysatorbeschichtung mit elektrokatalytisch aktiven Komponenten auf Basis von Rutheniumoxid und Titanoxid bereitzustellen, die die vorstehenden Nachteile der bislang bekannten Beschichtungen überwindet und bei Anwendung auf einer Elektrode eine niedrigere Überspannung bei der Chlorentwicklung beispielweise in der Chloralkali-Elektrolyse ermöglicht.

Spezielle Aufgabe der Erfindung ist es, ein elektrochemisches Präparationsverfahren für TiO₂-RuO₂-Mischoxid-Schichten zu entwickeln, das gegenüber den bereits bekannten Verfahren verbesserte Eigenschaften zeigt.

Eine weitere Aufgabe der Erfindung ist es, die Zahl der erforderlichen Kalzinierungsschritte im Vergleich zur konventionellen Syntheseroute oder anderen bekannten Verfahren zu reduzieren. Das Verfahren soll auf kostengünstigen Edukten aus anorganischen Ruthenium- und Titan-Salzen basieren, die ebenfalls bei dem konventionellen Verfahren eingesetzt werden. Gegenüber dem konventionellen Verfahren und bereits bekannten elektrochemischen Syntheserouten soll es verbesserte Eigenschaften hinsichtlich der katalytischen Aktivität zeigen, so dass der Gehalt an Edelmetall verringert werden kann.

Die zuvor beschriebene Aufgabe wird erfindungsgemäß dadurch gelöst, dass eine ausgewählte Katalysatorbeschichtung auf Basis von Rutheniumoxid und Titanoxid eingesetzt wird, in der RuO₂ und TiO₂ überwiegend als Mischoxidphase vorliegen.

Gegenstand der Erfindung ist eine Katalysatorbeschichtung mit elektrokatalytisch aktiven Komponenten auf Basis von Rutheniumoxid und Titanoxid und gegebenenfalls einem oder mehreren metallischen Dotierungselementen insbesondere aus der Reihe der Übergangsmetalle, wobei die Komponenten Rutheniumoxid und Titanoxid vorwiegend als RuO₂ und TiO₂ in Rutilform vorliegen, dadurch gekennzeichnet, dass RuO₂ und TiO₂ überwiegend als Mischoxidphase vorliegen, insbesondere erkennbar an einer Verschiebung des Röntgenbeugungsreflexes von 27,477° (2 Theta Wert der reinen TiO₂ Rutilphase im Beugungsspektrum Cu Kₐₗₚₕₐ ) zu einem Winkel von wenigstens 27,54°.

Überraschend wurde gefunden, dass Titan elektrochemisch auch als Hydroxokomplex abgeschieden werden kann. Titan und Ruthenium können somit beide über die gleiche chemische Route abgeschieden werden, was die Homogenität in der Durchmischung beider Komponenten verbessert. Durch diesen veränderten Abscheidungsmechanismus ändert sich auch der Wachstumsmechanismus der Schichten und es wird eine besondere Oberflächenmorphologie erhalten.

Bevorzugt liegen wenigstens 75 Gew.-% des RuO₂ und TiO₂ in der Katalysatorbeschichtung als Mischoxidphase vor.

Die erfindungsgemäß präparierten Mischoxide zeichnen sich dadurch aus, dass sie gegenüber den anderen Verfahren ein anderes Schichtenwachstum aufweisen und daher eine spezielle Oberflächenmorphologie bilden, bei der eine Mud-Cracked Struktur mit sehr breiten Rissen entsteht, die zusätzlich kugelförmige Strukturen an der Oberfläche besitzt.

Diese besondere Oberflächenmorphologie erhöht offenbar die aktive Oberfläche, die zur Elektrokatalyse genutzt werden kann. Somit wird die katalytische Aktivität verbessert und der Edelmetallgehalt kann reduziert werden.

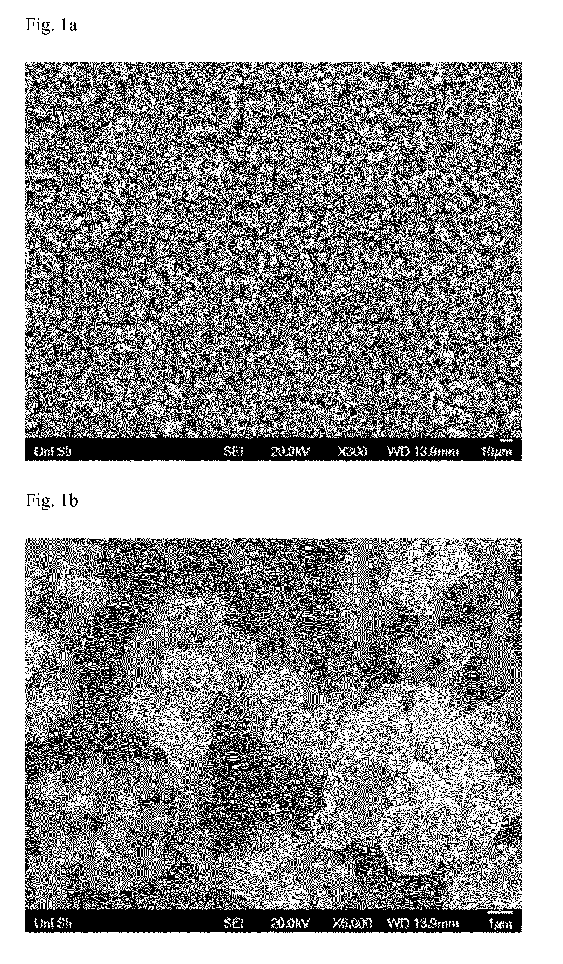

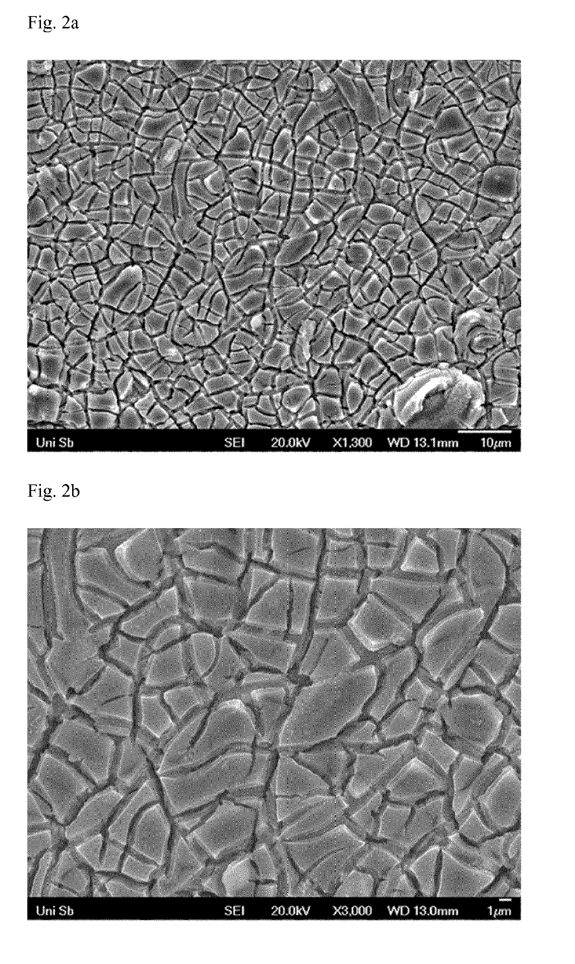

Für elektrochemisch präparierte TiO₂-RuO₂-Mischoxide werden z. B. Mud-Cracked Oberflächen erhalten, die Inseln von ca. 10-20 µm Breite und Risse von ca. 5 - 10 µm aufweisen (Figur 1a und b). Auf der Oberfläche der Inseln sitzen kugelförmige Strukturen mit ca. 0,1-2 µm Durchmesser (Figur 1a und b). Die konventionell präparierte TiO₂-RuO₂-Vergleichsprobe zeigt Inseln mit ca. 5 - 10 µm Breite und eine schmalere Rissbreite von ca. 1 µm (Figur 2a +b).

Diese besondere Oberflächenmorphologie mit den kugelförmigen Strukturen wird nicht durch andere Präparationsmethoden wie die thermische Zersetzung oder die Sol-Gel-Synthese erreicht. Auch die elektrochemische Mischoxidsynthese für TiO₂-RuO₂ von I. Zhitomirsky, beschrieben in Journal of Materials Science, 1999, 34, Seiten 2441-2447, die im weiteren als Vergleichsbeispiel angeführt ist, zeigt eine glatte Oberflächenmorphologie ohne kugelförmige Strukturen.

Edelmetalle zeigen allgemein ein kugelförmiges Wachstum (Blumenkohlstruktur), wenn sie durch Elektrodeposition nanokristallin hergestellt werden. Kugelförmige Strukturen wurden für Edelmetalloxidschichten wie z. B. amorphe RuO₂-IrO₂-Schichten, die über Cyclovoltammetrie hergestellt wurden, bereits berichtet (von C.-C. Hu und K.-H. Chang in Electrochimica Acta 2000, 45, Seiten 2685-2696). RuO₂ und IrO₂ bilden offenbar sehr gut Mischoxide, da sie isomorph sind und sehr ähnliche Gitterkonstanten aufweisen. Außerdem sind beide metallische Leiter. Für den Halbleiter TiO₂ sowie Mischoxide, die TiO₂ enthalten, wurde dieses Wachstum noch nicht berichtet. Die hier dargestellten Beispiele ( vergleiche Figuren 1, und 9 bis 14) zeigen ein kugelförmiges Wachstum bei einem TiO₂-Gehalt von 70-82 mol%.

Weiterer Gegenstand der Erfindung ist ein Verfahren zur elektrochemischen Herstellung einer Katalysatorbeschichtung mit elektrokatalytisch aktiven Komponenten auf Basis von Rutheniumoxid und Titanoxid und gegebenenfalls einem oder mehreren metallischen Dotierungselementen, insbesondere aus der Reihe der Übergangsmetalle, wobei die Katalysatorbeschichtung auf ein elektrisch leitfähiges Trägermaterial aufgebracht wird, dadurch gekennzeichnet, dass
a) die Schicht mittels eines elektrochemischen Verfahrens über die Fällung von Ru und Ti aus einer mindestens Ru- und Titansalze enthaltenden, sauren wässrigen Lösung als Hydroxovorstufen auf den Träger gebracht wird, wobei der Träger als Kathode geschaltet ist,
b) die entstandene Hydroxoverbindungen enthaltende Schicht anschließend einer thermischen Behandlung bei einer Temperatur von mindestens 300°C bevorzugt mindestens 400°C, unter Bildung der Katalysatorbeschichtung unterzogen wird.

Die Herstellung der Mischoxide kann mit nur einem Kalzinierungsschritt erfolgen, so dass aufwändige Mehrstufenprozesse wie bei den aus dem Stand der Technik bekannten vermieden werden können.

Es können auch insbesondere Metallsubstrate mit komplexer Geometrie z. B. Streckmetalle beschichtet werden.

Ein bevorzugtes Verfahren ist dadurch gekennzeichnet, dass der Träger auf metallischem Titan oder Tantal, bevorzugt auf Titan basiert.

Als bevorzugte Ruthenium und Titansalze werden Rutheniumchlorid und Titanchlorid in Schritt a) eingesetzt.

Zur Herstellung einer Katalysatorbeschichtung mit binären TiO₂-RuO₂-Mischoxiden werden in einem besonders bevorzugten Verfahren Titan(IV)chlorid (TiCl₄), Ruthenium(III)chlorid (RuCl₃), Kochsalz (NaCl), Salzsäure (HCl), Isopropanol (i-PrOH) und Wasser H₂O als Edukte verwendet.

Die Schwierigkeit in der elektrochemischen Metalloxid-Synthese liegt darin, dass das Oxid nur an der Elektrode und nicht im Elektrolyten gefällt werden soll. Andernfalls ist das Abscheidungsbad instabil. Außerdem kann als Nebenreaktion das reine Edelmetall kathodisch abgeschieden werden. Diese Probleme können insbesondere durch eine spezielle Badzusammensetzung, die Abscheidungstemperatur, die Abscheidungsstromparameter und gegebenenfalls die Strömungsbedingungen gelöst werden.

In einem bevorzugten Verfahren weist die Salzlösung in der Stufe a) einen pH von höchstens 3,5 auf.

Besonders bevorzugt wird die Salzlösung in der Stufe a) mittels verdünnter Salzsäure sauer gehalten.

Als besonders bevorzugtes Lösungsmittel für die Salzlösung in der Stufe a) wird eine Mischung von Wasser mit einem niederen Alkohol (C₁ bis C₄-Alkohol), insbesondere mit Isopropanol verwendet.

In einer weiteren bevorzugten Variante des neuen Verfahrens wird bei der Abscheidung gemäß der Stufe a) eine Stromdichte (Absolutwert) von mindestens 30 mA/cm² eingehalten.

Eine andere bevorzugte Variante des neuen Verfahrens ist dadurch gekennzeichnet, dass die Salzlösung in der Stufe a) auf einer Temperatur von höchstens 20°C, bevorzugt höchstens 10°C, besonders bevorzugt höchstens 5°C gehalten wird.

In einer besonders bevorzugten Ausführung des neuen Verfahrens erfolgt die Fällung der Hydroxovorstufen der Metalloxide durch lokale Basenbildung an der Elektrodenoberfläche.

Die Temperung in Schritt b) des neuen Verfahrens erfolgt besonders bevorzugt über mindestens 10 Min..

Durch die relativ hohe Konzentration von Titan- und Ruthenium-Salz werden beide Komponenten unselektiv abgeschieden und können besser ein homogenes Mischoxid bilden. Da im Abscheidungsbad kein Peroxid vorhanden ist, werden beide Komponenten über Hydroxokomplexe abgeschieden. Die Abscheidung über eine gemeinsame chemische Route fördert offenbar die Mischoxidbildung.

Die Stabilität des Abscheidungsbads wird insbesondere bevorzugt durch Ansäuern mit Salzsäure (HCl) und eine niedrige Reaktionstemperatur von 5°C gewährleistet. Für die Stabilität ist es wünschenswert, dass der Gesamt-pH-Wert des Bades konstant bleibt. Daher sollte bei der Abscheidung das Elektrolytvolumen insbesondere so gewählt werden, dass die lokalen pH-Änderungen kompensiert werden oder es muss entsprechend HCl nachdosiert werden.

Durch die alternative Zugabe von weiteren Metallsalzen als Dotierungsmittel, z. B. Iridium(III)chlorid (IrCl₃), Zinn(IV)chlorid (SnCl₄), Antimon(III)chlorid (SbCl₃) und Mangan(II)chlorid (MnCl₂) zur Lösung in Schritt a) des neuen Verfahrens können bevorzugt auch multinäre Mischoxide erhalten werden. Die Stöchiometrie der erhaltenen Mischoxide ist von der Elektrolytzusammensetzung und der Stromdichte abhängig und kann somit kontrolliert werden. Beispiele für elektrochemische Syntheserouten für ternäre und multinäre Mischoxide auf Basis von TiO₂-RuO₂ sind bislang noch nicht publiziert worden.

Gegenstand der Erfindung ist auch eine neue Elektrode aufweisend eine neue Katalysatorbeschichtung wie oben beschrieben.

Bevorzugt ist eine Elektrode mit einer neuen Katalysatorbeschichtung die aus einem neuen Verfahren wie oben beschrieben erhalten wird.

Weiterer Gegenstand der Erfindung ist die Verwendung der neuen Elektrode zur elektrochemischen Herstellung von Chlor aus Chlorwasserstoff- oder Alkalichloridlösungen, insbesondere aus Kochsalzlösungen.

Die Erfindung wird nachfolgend anhand der Figuren durch die Beispiele, welche jedoch keine Beschränkung der Erfindung darstellen, näher erläutert.

Es zeigen:
Figuren 1a + b REM Bilder einer TiO₂-RuO₂/Ti-Beschichtung mit 18 mol% Ru durch Elektrodeposition bei verschiedener Vergrößerung
Figuren 2a + b REM Bilder einer Vergleichsprobe: TiO₂-RuO₂/Ti mit 31,5 mol% Ru (aus Beispiel 1c) nach thermischem Zersetzungsverfahren bei verschiedener Vergrößerung
Figur 3 Röntgendiffraktogramm-Auswertung eines TiO₂-RuO₂/Ti-Coatings mit 18 mol% Ru durch Elektrodeposition. Das Röntgendiffraktogramm ist basislinienkorrigiert und auf der 2θ-Achse auf den (002)-Reflex von Titan als interne Referenz korrigiert

| **2θ-Reflex** / ° | **Zuordnung** | **(hkl)** | **2θ-Referenz-Wert** / ° |
|---|---|---|---|
| 27,60 (±0,06) | TiO₂-RuO₂ Rutil-Mischoxid-Phase | (110) | |
| | TiO₂ Rutil 00-021-1276 | (110) | 27,477 |
| | RuO₂ Rutil 00-040-1290 | (110) | 28,010 |

Figuren 4a + b REM-Aufnahmen der Zhitomirsky-Vergleichsprobe (gemäß Beispiel 1b) bei verschiedener Vergrößerung
Figur 5 Röntgendiffraktogramm-Auswertung an TiO₂-RuO₂ nach Literaturvorschrift von Zhitomirsky mit 25%-Ru-Badzusammensetzung:

| **20-Reflex/°** | **Zuordnung** | **(hkl)** | **2θ-Referenz-Wert** / ° |
|---|---|---|---|
| 27,48 (±0,06) | TiO₂-RuO₂ Rutil-Mischoxid-Phase | (110) | |
| | TiO₂ Rutil, Powder Diffraction File Nummer 00-021-1276 | (110) | 27,477 |
| | RuO₂ Rutil, Powder Diffraction File Nummer 00-040-1290 | (110) | 28,010 |

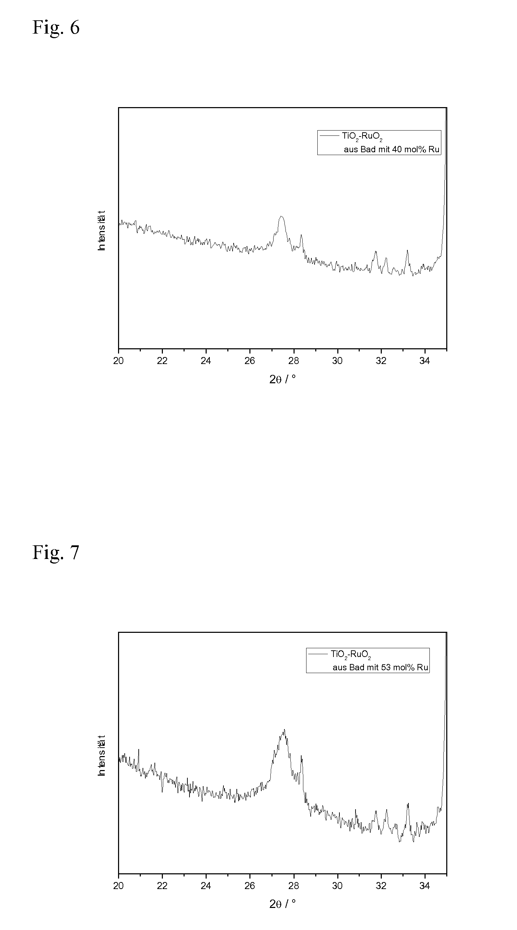

Figur 6 Röntgendiffraktogramm-Auswertung an TiO₂-RuO₂ nach modifizierter Literaturvorschrift von Zhitomirsky mit 40%-Ru-Badzusammensetzung:

| **2θ-Reflex/°** | **Zuordnung** | **(hkl)** | **2θ-Referenz-Wert /** ° |
|---|---|---|---|
| 27,48 (±0,08) | TiO₂-RuO₂ Rutil-Mischoxid-Phase | (110) | |
| | TiO₂ Rutil, Powder Diffraction File Nummer 00-021-1276 | (110) | 27,477 |
| | RuO₂ Rutil, Powder Diffraction File Nummer 00-040-1290 | (110) | 28,010 |

Figur 7 Röntgendiffraktogramm-Auswertung an TiO₂-RuO₂ nach modifizierter Literaturvorschrift von Zhitomirsky mit 53%-Ru-Badzusammensetzung:

| **2θ-Reflex/°** | **Zuordnung** | **(hkl)** | **2θ-Referenz-Wert /** ° |
|---|---|---|---|
| 27,5 (±0,08) | TiO₂-RuO₂ Rutil-Mischoxid-Phase | (110) | |
| | TiO₂ Rutil, Powder Diffraction File Nummer 00-021-1276 | (110) | 27,477 |
| | RuO₂ Rutil, Powder Diffraction File Nummer 00-040-1290 | (110) | 28,010 |

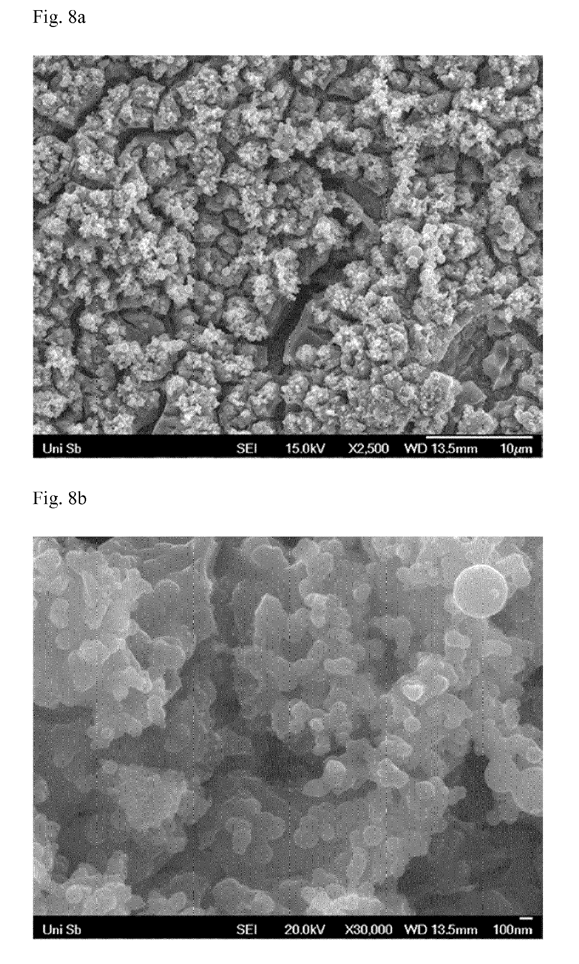

Figuren 8a + b REM Bilder eines TiO₂-RuO₂-IrO₂/Ti-Coatings mit 16 mol% Ru und 2,6 mol% Ir durch Elektrodeposition bei verschiedener Vergrößerung

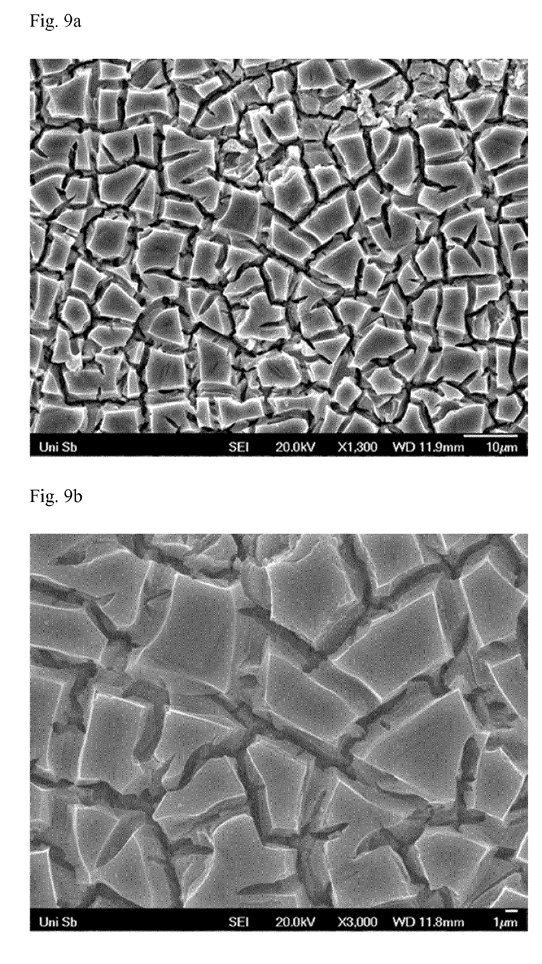

Figuren 9a + b REM Bilder einer Vergleichsprobe: TiO₂-RuO₂-IrO₂/Ti-Coating mit 17 mol% Ru und 8,7 mol% Ir nach thermischen Zersetzungsverfahren (s. Beispiel 1d) bei verschiedener Vergrößerung

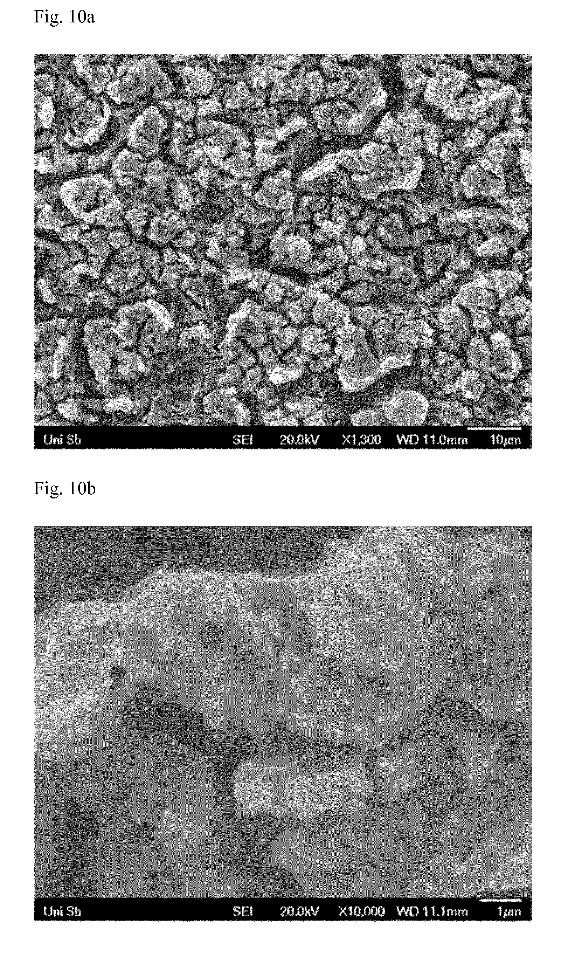

Figuren 10a + b REM Bilder eines TiO₂-RuO₂-SnO₂/Ti-Coatings mit 16,2 mol% Ru und 11 mol% Sn durch Elektrodeposition bei verschiedener Vergrößerung

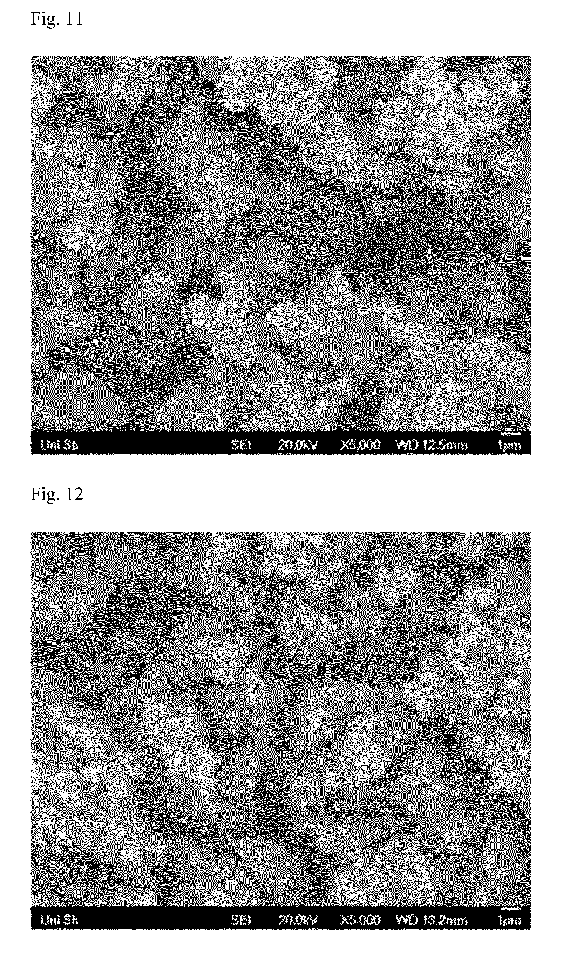

Figur 11 ein REM Bild eines TiO₂-RuO₂-SbO₂/Ti-Coatings mit 14 mol% Ru und 6 mol% Sb durch Elektrodeposition
Figur 12 ein REM Bild eines TiO₂-RuO₂-MnO₂/Ti-Coatings mit 15 mol% Ru und 6 mol% Mn durch Elektrodeposition

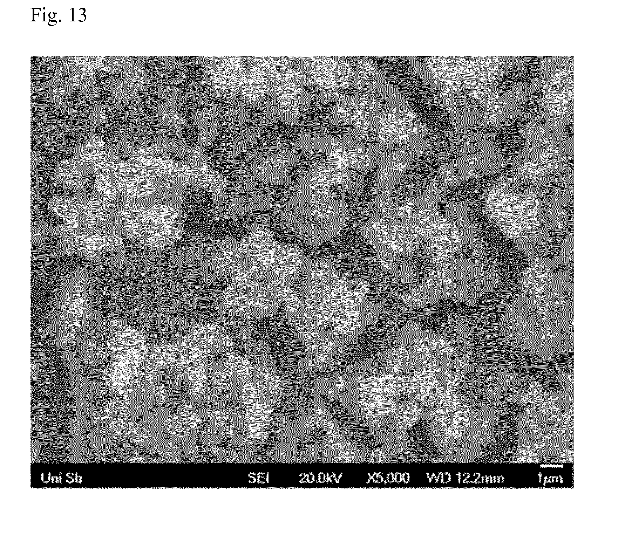

Figur 13 ein REM Bild eines TiO₂-RuO₂-SnO₂-SbO₂/Ti-Coatings mit 11,5 mol% Ru, 9,5 mol% Sn, 5,5 mol% Sb durch Elektrodeposition

Zur Messung der Röntgendiffraktogramme in den nachfolgenden Beispielen wurde ein Diffraktometer vom Typ X'Pert Pro MP von PANalytical B.V. verwendet. Das Diffraktometer arbeitet mit Cu Kₐₗₚₕₐ Röntgenstrahlung. Die Steuerung des Gerätes und die Aufzeichnung der generierten Daten erfolgt mit Hilfe der Software X'Pert Data Collector. Gemessen wurde mit einer Scangeschwindigkeit von 0,0445 °/s und einer Step size von 0,0263 °.

Die in den Beispielen dargestellten Diffraktogramme wurden auf ihren Untergrund korrigiert. Zusätzlich erfolgte eine Höhenfehlerkorrektur auf den (002)-Referenzpeak des Titansubstrates als interne Referenz.

Die Untersuchungen mittels Rasterelektronenmikroskopie (REM) erfolgten an einem Gerät vom Typ JxA-840A von JEOL.

Elektrochemische Experimente erfolgten an einem 16fach Multichannel Potentiostat/Galvanostat (Modell VMP3) von Princeton Applied Research/BioLogic Science Instruments. Die Experimente erfolgten rechnergesteuert mit der Software EC-Lab. Gemessene Potentiale wurde um Ohmsche Spannungsabfälle in der Zelle korrigiert (sogenannte IR-Korrektur).

Die vorliegenden Messungen mittels Optischer Emissionsspektralanalyse mit induktiv gekoppeltem Plasma (ICP-OES) wurden mit einem Spektrometer des Typs 720-ES von Varian durchgeführt. Zur Probenvorbereitung wurde die Elektrodenbeschichtung vom Substrat abgelöst und die erhaltene Suspension durch Zugabe von Königswasser unter Erhitzen gelöst.

### Beispiele

### Beispiel 1a

Die Titanelektrode in Form eines Plättchens mit 15 mm Durchmesser und 2 mm Dicke wird durch Sandstrahlen und chemisches Ätzen (2 h bei 80°C in 10 Gew.-% Oxalsäure) vorbehandelt.

Das Abscheidungsbad enthält Isopropanol (i-PrOH) und Wasser im Volumenverhältnis 9 : 5, 63 milli-Mol/Liter Titan(IV)chlorid (63 mM/l TiCl₄), 15 milli-Mol/Liter Ruthenium(III)chlorid (15 mM/l RuCl₃), 20 milli-Mol/Liter Salzsäure (20 mM/l HCl) und 12 milli-Mol / Liter Kochsalz (12 mM/l NaCl).

(Das im Beispiel angegebene Alkohol/Wasser-Verhältnis ist das Endverhältnis, was nach Zugabe aller Salze und Säuren erhalten werden sollte.)Die Elektrodeposition erfolgt in einem 3-Elektroden-System in einer 1-Kompartmentzelle. Arbeits- und Gegenelektrode sind parallel in einem Abstand von 40 mm angeordnet. Die Referenzelektrode befindet sich ca. 2 mm über der Arbeitselektrode. Die Abscheidung erfolgt kathodisch an der Arbeitselektrode unter mäßigem Rühren bei 5°C und einer konstanten kathodischen Stromdichte von -56 mA/cm². Bei einer Abscheidedauer von 60 min wird eine Beladung von 2,1 mg abgeschieden.

Die Gegenelektrode besteht aus einem elektrochemisch beschichteten TiO₂-RuO₂-Ti-Netz (4 x 4 cm²). Referenzelektrode ist Ag/AgCl.

Die abgeschiedene Schicht wird anschließend durch thermische Behandlung in ein kristallines Oxid überführt. Die Kalzinierung erfolgt bei 450°C an Luft, wobei die Elektrode in 1 h von Raumtemperatur auf 450°C erhitzt und weitere 90 min bei konstanten 450°C getempert wird.

Eine Analyse durch Optische Emissionsspektralanalyse mit induktiv gekoppeltem Plasma (ICP-OES) zeigt, dass hierbei eine RuTi-Zusammensetzung von 18 mol% Ru erhalten wird. Andere Zusammensetzungen ergeben sich durch die Konzentrationsänderung des Ru-Gehalts im Elektrolyt (s. Tabelle 1).

**Tabelle 1 Coatingzusammensetzung für TiO₂-RuO₂ (durch ICP-OES bestimmt) für verschiedene Badzusammensetzungen:**

| **Badkonzentration c(RuCl₃) / mM/l** | **Ru-Gehalt Beschichtung** / **mol%** | **Ti-Gehalt Beschichtung** / **mol%** |
|---|---|---|
| 3 | 12 | 88 |
| 6 | 14 | 86 |
| 10 | 16 | 84 |
| 13 | 17 | 83 |
| 15 | 18 | 82 |
| 23 | 21 | 79 |

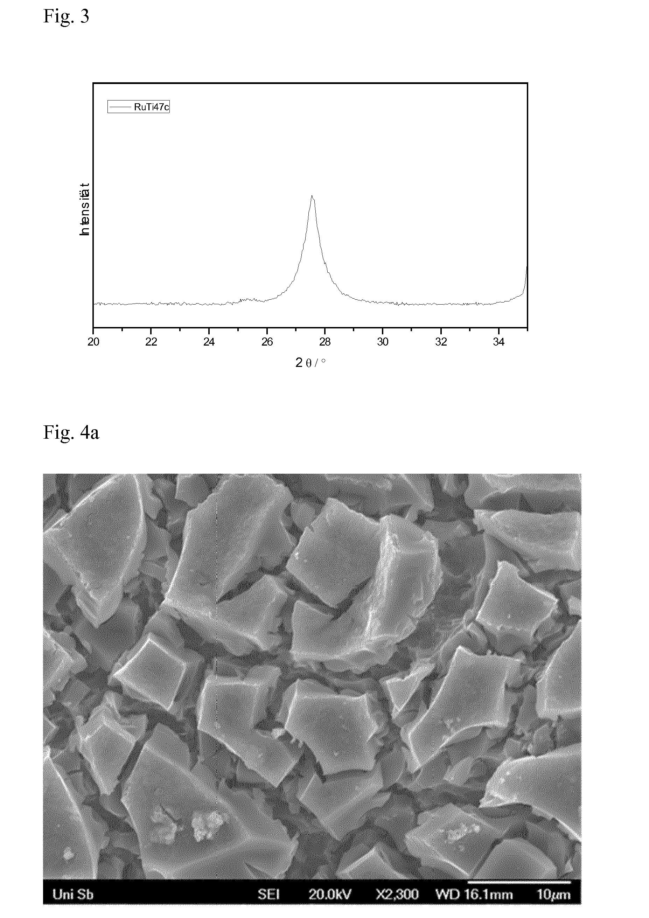

In Figur 3 ist das Röntgendiffraktogramm eines TiO₂-RuO₂-Mischoxids mit der Zusammensetzung von 18 mol% Ru dargestellt. Zur Interpretation der TiO₂-RuO₂ Mischoxidbildung wird der 2θ-Bereich von 27° bis 29° ausgewertet. In diesem Bereich ist die Rutil-Mischoxidphase als (110)-Reflex zu sehen, der sich deutlich zwischen den Referenzen für reine TiO₂- und reine RuO₂-Rutilphasen befindet. Die Verschiebung des (110)-Rutilreflexes gegenüber den Referenzen für reines TiO₂ und reines RuO₂ ist ein eindeutiger Hinweis auf die Bildung eines Mischoxids.

Eine Kristallitgrößenabschätzung nach Scherrer ergibt Kristallitgrößen von 18 nm.

In Figur 1a und b ist die REM-Aufnahme für ein TiO₂-RuO₂-Mischoxids mit der Zusammensetzung von 18 mol% Ru dargestellt. Es zeigt die spezielle Oberflächenstruktur bestehend aus Mud-Cracked-Oberfläche und Kugelstrukturen.

Die elektrochemische Aktivität für die Chlorentwicklung wurde im Labormaßstab auf Titanelektroden (15 mm Durchmesser, 2 mm Dicke) durch Aufnahme von Polarisationskurven gemessen. Die Interpretation der Daten erfolgte anhand von Vergleichsproben, die konventionell über thermische Zersetzung (s. Beispiel 1c u. 1d) oder über Elektrodeposition nach einer Literatursynthese von Zhitomirsky (s. Beispiel 1b) präpariert wurden. Die Ergebnisse sind in Tabelle 2 dargestellt.

Versuchsparameter: gemessen in 200 g/l NaCl (pH 3) unter Durchfluss von 100 ml/min bei 80°C, galvanostatisch mit 5 min pro Stromstufe, Potential gegen Ag/AgCl gemessen und umgerechnet auf Normalwasserstoffelektrode (NHE), Potentialwerte IR-korrigiert, Gegenelektrode: platiniertes Titanstreckmetall.

**Tabelle 2 Chlorpotentiale für TiO₂-RuO₂**

| **Probe** | **Präparation** | **Verbindung** | **Zusammensetzung und Beladung** | **E** / **V vs. NHE @ 4 kA/m²** |
|---|---|---|---|---|
| *s. Beispiel 1c* | thermische | TiO₂-RuO₂/Ti | 31,5 mol% Ru | 1,423 |
| | Zersetzung | | 16,1 g/m² Edelmetallbeladung | |
| *s. Beispiel 1d* | thermische | TiO₂-RuO₂- | 17 mol% Ru | 1,403 |
| | Zersetzung | IrO₂/Ti | 8,7 mol% Ir | |
| | | | 10,83 g/m² Edelmetallbeladung | |
| *RuTi4* | Elektrodeposition | TiO₂-RuO₂/Ti | 18 mol% Ru | 1,372 |
| | | | Abscheidebad mit 15 mmol/l RuCl₃ | |
| | | | Abscheidedauer 60 min | |
| | | | 2,4 g/m² Edelmetallbeladung | |
| *RuTi5* | Elektrodeposition | TiO₂-RuO₂/Ti | 21 mol% Ru | 1,382 |
| | | | Abscheidebad mit 23 mmol/l RuCl₃ | |
| | | | Abscheidedauer 60 min | |
| | | | 3 g/m² Edelmetallbeladung | |
| *Literatursynsthese nach Zhitomirsky (s. Beispiel 1b)* | Elektrodeposition | TTiO₂-RuO₂/Ti | 9 mol% Ru | 1,462 |
| | | | 2,3 g/m² Edelmetallbeladung | |

Die elektrochemisch präparierten TiO₂-RuO₂-Mischoxide zeigen gegenüber den konventionell durch thermische Zersetzung präparierten Standardproben (s. Beispiel 1c und Beispiel 1d) bei niedrigerer Edelmetallbeladung ein niedrigeres Chlorpotential und somit die höhere katalytische Aktivität. Es wurde ebenfalls eine Vergleichsprobe gemäß der Synthese von Zhitomirsky über Elektrodeposition erstellt, die die gleiche absolute Rutheniumbeladung aufweist (Erstellung der Vergleichsprobe siehe Beispiel 1b). Auch hier zeigt sich bei dem hier entwickelten Verfahren eine höhere katalytische Aktivität und somit eine Verbesserung gegenüber dem Stand der Technik.

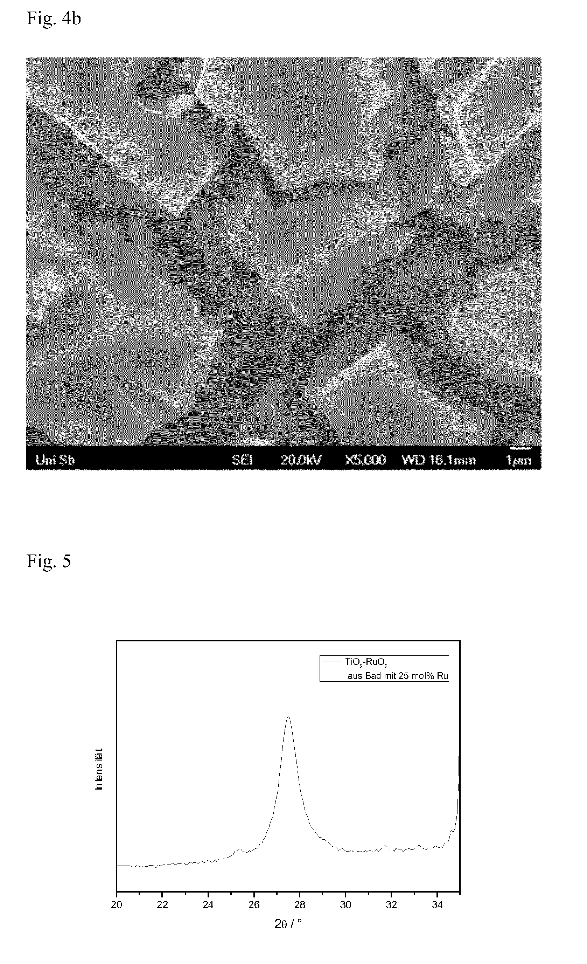

In Figur 4a +b sind REM-Aufnahmen für die Vergleichsprobe nach Zhitomirsky gezeigt. Die Oberflächenmorphologie dieser Probe ähnelt sehr stark der konventionell präparierten Standardprobe (aus Beispiel 1c, vgl. mit Figur 2a +b) und zeigt somit einen deutlichen Unterschied zu den Proben aus dem hier entwickelten Verfahren (vgl. Figur 1a +b).

### Beispiel 1b:

### Beispiel: Nachstellung einer Literatursynthese für TiO₂-RuO₂/Ti-Coatings

### Herstellung eines TiO₂-RuO₂-Mischoxids auf Titan nach Literaturbeispiel

I. Zhitomirsky beschreibt in Journal of Materials Science, 1999, 34, Seiten 2441-2447 erstmalig eine simultane elektrochemische Abscheidung von TiO₂ und RuO₂, wobei beide Komponenten als Mischoxide abgeschieden werden. Die gleiche Synthese findet sich auch in weiteren Publikationen (I. Zhitomirsky, Journal of the European Ceramic Society, 1999, 19, Seiten 2581-2587 und I. Zhitomirsky, Advances in Colloid and Interface Science, 2002, 97, Seiten 279-317).

Bei dieser Elektrosynthese wird ein Bad bestehend aus Methanol, Wasser, Ruthenium(III)chlorid (RuCl₃), Titan(IV)chlorid (TiCl₄) und Wasserstoffperoxid (H₂O₂) verwendet. Bei kathodischen Stromdichten von -20 mA/cm² werden TiO₂-RuO₂-Schichten sukzessive als Multilayer abgeschieden (gemäß I. Zhitomirsky in Journal of Materials Science, 1999, 34, Seiten 2441-2447).

Die Titanelektrode in Form eines Plättchens mit 15 mm Durchmesser und 2 mm Dicke wird durch Sandstrahlen und chemisches Ätzen (2 h bei 80°C in 10 Gew.-% Oxalsäure) vorbehandelt.

Das Abscheidungsbad wird gemäß der Literaturvorschrift (I. Zhitomirsky, Journal of Materials Science, 1999, 34, Seiten 2441-2447) durch Mischung einer Titan-Stammlösung (A) und einer Ruthenium-Stammlösung (B) bei 1°C präpariert.

Die Titan-Stammlösung (A) enthält 5 milli-Mol / Liter Titan(IV)chlorid (5 mM/1 TiCl₄) und 10 milli-Mol / Liter Wasserstoffperoxid (10 mM/l H₂O₂) in Methanol.

Die Ruthenium-Stammlösung (B) enthält 5 milli-Mol / Liter Ruthenium(III)chlorid (5 mM/l RuCl₃) in Wasser.

Die Titan-Stammlösung (A) und die Ruthenium-Stammlösung (B) werden im Volumenverhältnis 3 : 1 gemischt.

Die Elektrodeposition erfolgt in einem 3-Elektroden-System in einer 1-Kompartmentzelle. Arbeits- und Gegenelektrode sind parallel in einem Abstand von 40 mm angeordnet. Die Referenzelektrode befindet sich ca. 2 mm über der Arbeitselektrode. Die Gegenelektrode besteht aus einem elektrochemisch beschichteten TiO₂-RuO₂-Ti-Netz (4 x 4 cm²). Referenzelektrode ist Ag/AgCl.

Die Abscheidung erfolgt kathodisch an der Arbeitselektrode ohne Rühren bei 1°C und einer konstanten kathodischen Stromdichte von -20 mA/cm². Gemäß der Vorschrift wird das Coating sukzessive als Multilayer mit einer jeweiligen Abscheidungszeit von 10 min abgeschieden. Hierbei wird jeweils eine Beladung von ca. 0,8 mg abgeschieden.

Die abgeschiedene Schicht wird anschließend durch thermische Behandlung in ein kristallines Oxid überführt. Die Kalzinierung erfolgt nach jedem Depositionsschritt für 10 min bei 450°C an Luft. Nach Erreichen der gewünschten Oxidbeladung erfolgt eine Endkalzinierung bei 450°C an Luft, wobei die Elektrode in 1 h von Raumtemperatur auf 450°C erhitzt und weitere 90 min bei konstanten 450°C getempert wird.

Eine Analyse durch Optische Emissionsspektralanalyse mit induktiv gekoppeltem Plasma (ICP-OES) zeigt, dass hierbei eine RuTi-Zusammensetzung von 9 mol% Ru erhalten wird

Es wurden ebenfalls Experimente durchgeführt, um Mischoxide mit einem erhöhten RuO₂-Gehalt zu erhalten. Hierzu wurde einfach die Menge des zugegebenen RuCl₃-Salzes erhöht. Das Methanol-Wasser-Verhältnis wurde konstant gehalten. Die erhaltenen Schichten wurden über Röntgendiffraktometrie analysiert.

Die hier gezeigten Diffraktogramm wurden alle auf der 2θ-Achse auf den (002)-Reflex von Titan als interne Referenz korrigiert.

Es sind Diffraktogramme von Schichten gezeigt, die aus Bädern mit verschiedenen Ru-Zusammensetzungen bei -20 mA/cm² und 20 min Abscheidezeit mit anschließender Kalzinierung bei 450°C erhalten wurden. Sämtliche Abscheidungsbäder wurden wenige Minuten vor der Abscheidung frisch angesetzt.

Das Diffraktogramm einer TiO₂-RuO₂-Beschichtung nach der Literaturvorschrift von Zhitomirsky mit 25%-Ru-Badzusammensetzung ist in Figur 5 gezeigt. Zur Interpretation der TiO₂-RuO₂-Mischoxidbildung wird der 2θ-Bereich von 27° bis 29° ausgewertet. In diesem Bereich liegt eine Rutilphase, die sich nahezu vollständig auf der reinen TiO₂-Rutil-Referenz befindet.

Das Diffraktogramm einer TiO₂-RuO₂-Beschichtung nach modifizierter Literaturvorschrift von Zhitomirsky mit 40%-Ru-Badzusammensetzung ist in Figur 6 gezeigt. Bei der modifizierten Zhitomirsky-Synthese mit erhöhtem RuCl₃-Gehalt sinkt die Abscheidungsrate erheblich gegenüber der nichtmodifizierten Zhitomirsky-Synthese. Die bei gleicher Abscheidezeit erhaltene Schicht beträgt nur noch 1/5 der Beladungsmenge, die aus der nichtmodifizierten Synthese erhalten wurde. Im Diffraktogramm entsteht eine Rutilphase, die mit 27,48° (±0,08°) vollständig auf der reinen TiO₂-Referenz liegt. Eine Anreicherung der Rutilphase mit RuO₂ wird hier somit nicht beobachtet. Des Weiteren haben sich mehrere Fremdphasen gebildet, die sich nicht zuordnen lassen.

Das Diffraktogramm einer TiO₂-RuO₂-Beschichtung nach **modifizierter** Literaturvorschrift von Zhitomirsky mit 53%-Ru-Badzusammensetzung ist in Figur 7 gezeigt. Bei einer weiteren Erhöhung der RuCl₃-Konzentration liegt immer noch eine geringe Abscheidungsrate vor. Im Diffraktogramm ist bei 27,5° ein inhomogener Rutilpeak zu sehen, der offensichtlich eine Überlagerung aus mehreren Rutilphasen darstellt. Auch hier entstanden Fremdphasen, die sich nicht zuordnen lassen.

Zusammenfassend lässt sich anhand der Diffraktogramme sagen, dass eine weitere Erhöhung des RuCl₃-Gehalts eine schlechte Abscheidungsrate und eine schlechte Mischoxidbildung zur Folge hat.

### Beispiel 1c:

### TiO₂-RuO₂-Mischoxid hergestellt durch thermische Zersetzung

Zur Herstellung einer Beschichtung durch thermische Zersetzung wurde eine Beschichtungslösung enthaltend 2,00 g Ruthenium(III)chlorid-Hydrat (Ru-Gehalt 40,5 Gew.-%), 21,56 g n-Butanol, 0,94 g konzentrierte Salzsäure und 5,93 g Titansäuretetrabutylester Ti-(O-Bu)₄) hergestellt. Ein Teil der Beschichtungslösung wurde mittels eines Pinsels auf ein Titanplättchen aufgetragen, welches zuvor in 10 Gew.-% Oxalsäure bei ca 90 °C für 0,5h geätzt wurde. Dieses wurde nach dem Beschichtungsauftrag für 10 Minuten bei 80 °C an Luft getrocknet und anschließend für 10 Minuten bei 470 °C an Luft behandelt. Dieser Vorgang (Lösungsauftrag- Trocknung, Wärmebehandlung) wurde insgesamt acht Mal durchgeführt. Anschließend wurde das Plättchen für eine Stunde bei 520 °C an Luft behandelt. Die Ruthenium-Flächenbeladung wurde aus dem Verbrauch der Beschichtungslösung zu 16,1 g/m² bestimmt, bei einer Zusammensetzung von 31,5 mol-% RuO₂ und 68,5 mol-% TiO₂.

### Beispiel 1d:

### TiO₂-RuO₂-IrO₂-Mischoxid hergestellt durch thermische Zersetzung

Zur Herstellung einer Beschichtung durch thermische Zersetzung wurde eine Beschichtungslösung enthaltend 0,99 g Ruthenium(III)chlorid-Hydrat (Ru-Gehalt 40,5 Gew.-%), 0,78 g Iridium(III)chlorid-Hydrat (Ir-Gehalt 50,9 Gew.-%), 9,83 g n-Butanol, 0,29 g konzentrierte Salzsäure und 5,9 g Titansäuretetrabutylester Ti-(O-Bu)₄) hergestellt. Ein Teil der Beschichtungslösung wurde mittels eines Pinsels auf ein Titanplättchen aufgetragen, welches zuvor in 10 Gew.-% Oxalsäure bei ca 90 °C für 0,5h geätzt wurde. Dieses wurde nach dem Beschichtungsauftrag für 10 Minuten bei 80 °C an Luft getrocknet und anschließend für 10 Minuten bei 470 °C an Luft behandelt. Dieser Vorgang (Lösungsauftrag- Trocknung, Wärmebehandlung) wurde insgesamt acht Mal durchgeführt. Anschließend wurde das Plättchen für eine Stunde bei 470 °C an Luft behandelt. Die Ruthenium--Flächenbeladung wurde aus der Gewichtszunahme jeweils zu 5,44 g/m² bestimmt, die Iridium-Flächenbeladung entsprechend zu 5,38 g/m² (Gesamt-Edelmetallbeladung 10,83 g/m²) , bei einer Zusammensetzung von 17,0 mol-% RuO₂, 8,7 mol-% IrO₂ und 74,3 mol-% TiO₂.

### Beispiel 2:

### Herstellung eines TiO₂-RuO₂-IrO₂-Mischoxids auf Titan

Die Vorbehandlung der Titanelektrode (Plättchen mit 15 mm Durchmesser und 2 mm Dicke) erfolgte wie in Beispiel 1 beschrieben.

Das Abscheidungsbad enthält Isopropanol (i-PrOH) und Wasser im Volumenverhältnis 9 : 5, 63 milli-Mol / Liter Titan(IV)chlorid (63 mM/l TiCl₄), 15 milli-Mol / Liter Ruthenium(III)chlorid (15 mM/l RuCl₃), 5 milli-Mol / Liter Iridium(III)chlorid (5 mM/1 IrCl₃), 40 milli-Mol / Liter Salzsäure (40 mM/l HCl) und 12 milli-Mol / Liter Kochsalz (12 mM/l NaCl).

(Das im Beispiel angegebene Alkohol/Wasser-Verhältnis ist das Endverhältnis, was nach Zugabe aller Salze und Säuren erhalten werden sollte.)

Die Elektrodeposition erfolgte in der gleichen Anordnung wie in Beispiel 1 beschrieben unter mäßigem Rühren bei 5°C und einer konstanten kathodischen Stromdichte von -80 mA/cm² in 2 Schritten mit jeweils 50 und 10 min Abscheidedauer. Hierbei wird eine Beladung von 1,8 mg abgeschieden.

Es folgte eine thermische Behandlung der abgeschiedenen Schicht zur Überführung in ein kristallines Oxid. Zwischen den beiden Abscheidungen wurden die Proben innerhalb von 30 min von RT auf 450°C erhitzt und weitere 10 min bei 450°C kalziniert. Nach den Abscheidungen wurde ein weiteres Mal kalziniert. Die Kalzinierung erfolgte bei 450°C an Luft, wobei die Elektrode in 1 h von Raumtemperatur auf 450°C erhitzt und weitere 90 min bei konstanten 450°C getempert wurde.

Die Abhängigkeit der Coatingzusammensetzung von der Badzusammensetzung ist in Tabelle 3 dargestellt.

**Tabelle 3 Coatingzusammensetzung für TiO₂-RuO₂-IrO₂ (durch ICP-OES bestimmt) für verschiedene Badzusammensetzungen:**

| **Badkonzentration c(IrCl₃)/ mM/l** | **Ru-Gehalt Beschichtung/ mol%** | **Ir-Gehalt Beschichtung/ mol%** | **Ti-Gehalt Beschichtung/ mol%** |
|---|---|---|---|
| 2,4 | 17,1 | 1,5 | 81,4 |
| 4,8 | 16 | 2,6 | 81,4 |
| 7,1 | 15,5 | 3,5 | 81 |
| 9,5 | 15 | 4,5 | 80,5 |

Die elektrochemische Aktivität für die Chlorentwicklung wurde im Labormaßstab auf Titanelektroden (15 mm Durchmesser, 2 mm Dicke) durch Aufnahme von Polarisationskurven gemessen und mit Standardproben, die konventionell präpariert wurden, verglichen. Die Ergebnisse sind in Tabelle 4 dargestellt.

Versuchsparameter: gemessen in 200 g/l NaCl (pH 3) unter Durchfluss von 100 ml/min bei 80°C, galvanostatisch mit 5 min pro Stromstufe, Potential gegen Ag/AgCl gemessen und umgerechnet auf Normalwasserstoffelektrode (NHE), Potentialwerte IR-korrigiert, Gegenelektrode: platiniertes Titanstreckmetall

Die elektrochemisch präparierten TiO₂-RuO₂-IrO₂-Mischoxide zeigen gegenüber den Standardproben bei niedrigerer Edelmetallbeladung ein niedrigeres Chlorpotential und somit die höhere katalytische Aktivität.

**Tabelle 4 Chlorpotentiale für TiO₂-RuO₂-IrO₂**

| **Probe** | **Präparation** | **Verbindung** | **Zusammensetzung und Beladung** | **E** / **V vs. NHE @** 4 **kA/m²** |
|---|---|---|---|---|
| *s. Beispiel 1c* | thermische | TiO₂-RuO₂/Ti | 31,5 mol% Ru | 1,423 |
| | Zersetzung | | 16,1 g/m² Edelmetallbeladung | |
| *s. Beispiel 1d* | thermische | TiO₂-RuO₂-IrO₂/Ti | 17 mol% Ru | 1,403 |
| | Zersetzung | | 8,7 mol% Ir | |
| | | | 10,83 g/m² Edelmetallbeladung | |
| *IrRuTi3* | Elektrodeposition | TiO₂-RuO₂-IrO₂/Ti | 15,5 mol% Ru | 1,408 |
| | | | 3,5 mol% Ir | |
| | | | Abscheidebad mit 7,1 mmol/l IrCl₃ | |
| | | | Abscheidedauer 50 min | |
| | | | 2,1 g/m² Edelmetallbeladung | |
| *IrRuTi4* | Elektrodeposition | TiO₂-RuO₂-IrO₂/Ti | 15 mol% Ru | 1,390 |
| | | | 4,5 mol% Ir | |
| | | | Abscheidebad mit 9,5 mmol/l IrCl₃ | |
| | | | Abscheidedauer 50 min | |
| | | | 3 g/m² Edelmetallbeladung | |

Die Oberflächenmorphologie einer elektrochemisch präparierten TiO₂-RuO₂-IrO₂-Probe ist in Figur 8a +b als REM-Aufnahme dargestellt. Auch hier zeigt sich wie in Beispiel 1a (Figur 1a, b) die Mud-Cracked-Oberfläche in Kombination mit den kugelartigen Strukturen. Eine konventionell präparierte TiO₂-RuO₂-IrO₂-Standardprobe (s. Beispiel 1d) zeigt diese kugelartigen Strukturen nicht (Figur 9a +b).

### Beispiel 3:

### Herstellung eines TiO₂-RuO₂-SnO₂-Mischoxids auf Titan

Die Vorbehandlung der Titanelektrode (Plättchen mit 15 mm Durchmesser und 2 mm Dicke) erfolgte wie in Beispiel 1 beschrieben.

Das Abscheidungsbad enthält Isopropanol (i-PrOH) und Wasser im Volumenverhältnis 9 : 5, 63 milli-Mol / Liter Titan(IV)chlorid (63 mM/l TiCl₄), 15 milli-Mol / Liter Ruthenium(III)chlorid (15 mM/l RuCl₃), 3,7 milli-Mol / Liter Zinn(IV)chlorid (3,7 mM/l SnCl₄), 20 milli-Mol / Liter Salzsäure (20 mM/l HCl) und 12 milli-Mol / Liter Kochsalz (12 mM/l NaCl).

(Das im Beispiel angegebene Alkohol/Wasser-Verhältnis ist das Endverhältnis, was nach Zugabe aller Salze und Säuren erhalten werden sollte.)

Die Elektrodeposition erfolgte in der gleichen Anordnung wie in Beispiel 1 beschrieben unter mäßigem Rühren bei 5°C und einer konstanten kathodischen Stromdichte von -56 mA/cm² in 2 Schritten mit jeweils 60 und 20 min Abscheidedauer. Hierbei wird eine Beladung von 2,1 mg abgeschieden.

Die thermische Behandlung der abgeschiedenen Schicht zur Überführung in ein kristallines Oxid erfolgte wie in Beispiel 2. Die Abhängigkeit der Coatingzusammensetzung von der Badzusammensetzung ist in Tabelle 5 dargestellt.

**Tabelle 5 Coatingzusammensetzung für TiO₂-RuO₂-SnO₂ (durch ICP-OES bestimmt) für verschiedene Badzusammensetzungen:**

| **Badkonzentration c(SnCl₄)/ mM/l** | **Ru-Gehalt Beschichtung/ mol%** | **Sn-Gehalt Beschichtung/ mol%** | **Ti-Gehalt Beschichtung/ mol%** |
|---|---|---|---|
| 3,7 | 16,5 | 6,6 | 77 |
| 7,3 | 14,6 | 11 | 74,4 |

Die Oberflächenmorphologie einer elektrochemisch präparierten TiO₂-RuO₂-SnO₂-Probe ist in Figur 10a +b als REM-Aufnahme gezeigt. Auch hier zeigt sich wie in Beispiel 1a (Figur 1a, b) die Mud-Cracked-Oberfläche in Kombination mit den kugelartigen Strukturen.

### Beispiel 4:

### Herstellung eines TiO₂-RuO₂-SbO₂-Mischoxids auf Titan

Die Vorbehandlung der Titanelektrode (Plättchen mit 15 mm Durchmesser und 2 mm Dicke) erfolgte wie in Beispiel 1 beschrieben.

Das Abscheidungsbad enthält Isopropanol (i-PrOH) und Wasser im Volumenverhältnis 9 : 1, 56 milli-Mol / Liter Titan(IV)chlorid (56 mM/l TiCl₄), 13 milli-Mol / Liter Ruthenium(III)chlorid (13 mM/l RuCl₃), 3,7 milli-Mol / Liter Antimon(III)chlorid (3,7 mM/l SbCl₃), 20 milli-Mol / Liter Salzsäure (20 mM/l HCl) und 11 milli-Mol / Liter Kochsalz (11 mM/l NaCl).

(Das im Beispiel angegebene Alkohol/Wasser-Verhältnis ist das Endverhältnis, was nach Zugabe aller Salze und Säuren erhalten werden sollte.)

Die Elektrodeposition erfolgte in der gleichen Anordnung wie in Beispiel 1 beschrieben unter mäßigem Rühren bei 5°C und einer konstanten kathodischen Stromdichte von -28 mA/cm² in zwei Schritten mit jeweils 30 und 20 min Abscheidezeit. Hierbei wird eine Beladung von 1,8 mg abgeschieden.

Die thermische Behandlung der abgeschiedenen Schicht zur Überführung in ein kristallines Oxid erfolgte wie in Beispiel 2. Die Abhängigkeit der Coatingzusammensetzung von der Badzusammensetzung ist in Tabelle 6 dargestellt.

**Tabelle 6 Coatingzusammensetzung für TiO₂-RuO₂-SbO₂ (durch ICP-OES bestimmt) für verschiedene Badzusammensetzungen:**

| **Badkonzentration c(SbCl₃)/mM/l** | **Ru-Gehalt Beschichtung /mol%** | **Sb-Gehalt Beschichtung /mol%** | **Ti-Gehalt Beschichtung /mol%** |
|---|---|---|---|
| 1,9 | 15,5 | 2,1 | 82,4 |
| 3,7 | 14,3 | 4,1 | 81,6 |
| 4,8 | 14,3 | 5 | 80,7 |
| 6 | 13,9 | 6,2 | 79,9 |
| 7,1 | 14,4 | 7,5 | 78,1 |

Die Oberflächenmorphologie einer elektrochemisch präparierten TiO₂-RuO₂-SnO₂-Probe ist in Figur 11 als REM-Aufnahme gezeigt. Auch hier zeigt sich wie in Beispiel 1a (Figur 1) die Mud-Cracked-Oberfläche in Kombination mit den kugelartigen Strukturen.

### Beispiel 5:

### Herstellung eines TiO₂-RuO₂-MnO₂-Mischoxids auf Titan

Die Vorbehandlung der Titanelektrode (Plättchen mit 15 mm Durchmesser und 2 mm Dicke) erfolgte wie in Beispiel 1 beschrieben.

Das Abscheidungsbad enthält Isopropanol (i-PrOH) und Wasser im Volumenverhältnis 9 : 5, 63 milli-Mol / Liter Titan(IV)chlorid (63 mM/l TiCl₄), 15 milli-Mol / Liter Ruthenium(III)chlorid (15 mM/l RuCl₃), 3 milli-Mol / Liter Mangan(II)chlorid (3 mM/l MnCl₂), 20 milli-Mol / Liter Salzsäure (20 mM/l HCl) und 12 milli-Mol / Liter Kochsalz (12 mM/l NaCl).

(Das im Beispiel angegebene Alkohol/Wasser-Verhältnis ist das Endverhältnis, was nach Zugabe aller Salze und Säuren erhalten werden sollte.)

Die Elektrodeposition erfolgte in der gleichen Anordnung wie in Beispiel 1 beschrieben unter mäßigem Rühren bei 5°C und einer konstanten kathodischen Stromdichte von -80 mA cm⁻² in zwei Schritten mit jeweils 40 und 10 min Abscheidezeit. Hierbei wird eine Beladung von 3,8 mg abgeschieden.

Die thermische Behandlung der abgeschiedenen Schicht zur Überführung in ein kristallines Oxid erfolgte wie in Beispiel 2. Die Abhängigkeit der Coatingzusammensetzung von der Badzusammensetzung ist in Tabelle 7 dargestellt.

**Tabelle 7 Coatingzusammensetzung für TiO₂-RuO₂-MnO₂ (durch ICP-OES bestimmt) für verschiedene Badzusammensetzungen:**

| **Badkonzentration c(MnCl₂)** / **mM/l** | **Ru-Gehalt Beschichtung/mol%** | **Mn-Gehalt Beschichtung/mol%** | **Ti-Gehalt Beschichtung/mol%** |
|---|---|---|---|
| 2,9 | 17,1 | 3 | 79,9 |
| 8,7 | 15,4 | 6 | 78,6 |
| 14,4 | 13,1 | 11,6 | 75,2 |

Die Oberflächenmorphologie einer elektrochemisch präparierten TiO₂-RuO₂-MnO₂-Probe ist in Figur 12 als REM-Aufnahme gezeigt. Auch hier zeigt sich wie in Beispiel 1a (Figur 1) die Mud-Cracked-Oberfläche in Kombination mit den kugelartigen Strukturen.

### Beispiel 6:

### Herstellung eines quaternären TiO₂-RuO₂-SnO₂-SbO₂-Mischoxids auf Titan

Die Vorbehandlung der Titanelektrode (Plättchen mit 15 mm Durchmesser und 2 mm Dicke) erfolgte wie in Beispiel 1 beschrieben.

Das Abscheidungsbad enthält Isopropanol (i-PrOH) und Wasser im Volumenverhältnis 9 : 1, 56 milli-Mol / Liter Titan(IV)chlorid (56 mM/l TiCl₄), 13 milli-Mol / Liter Ruthenium(III)chlorid (13 mM/l RuCl₃), 2 milli-Mol / Liter Antimon(III)chlorid (2 mM/l SbCl₃), 6,6 milli-Mol / Liter Zinn(IV)chlorid (6,6 mM/l SnCl₄), 20 milli-Mol / Liter Salzsäure (20 mM/l HCl) und 11 milli-Mol / Liter Kochsalz (11 mM/l NaCl).

(Das im Beispiel angegebene Alkohol/Wasser-Verhältnis ist das Endverhältnis, was nach Zugabe aller Salze und Säuren erhalten werden sollte.)

Die Elektrodeposition erfolgte in der gleichen Anordnung wie in Beispiel 1 beschrieben unter mäßigem Rühren bei 5°C und einer konstanten kathodischen Stromdichte von -29 mA/cm² in zwei Schritten mit jeweils 20 min Abscheidezeit. Hierbei wird eine Beladung von 1,7 mg abgeschieden.

Die thermische Behandlung der abgeschiedenen Schicht zur Überführung in ein kristallines Oxid erfolgte wie in Beispiel 2. Die Abhängigkeit der Coatingzusammensetzung von der Badzusammensetzung ist in Tabelle 8 dargestellt.

**Tabelle 8 Coatingzusammensetzung für TiO₂-RuO₂-SnO₂-SbO₂ (durch ICP-OES bestimmt) für verschiedene Badzusammensetzungen:**

| **Badzusammensetzung c(SnCl₄)/mM/l** | **Ru-Gehalt Beschichtung /mol%** | **Sb-Gehalt Beschichtung /mol%** | **Sn-Gehalt Beschichtung /mol%** | **Ti-Gehalt Beschichtung /mol%** |
|---|---|---|---|---|
| 3,3 | 14,2 | 2,7 | 3,8 | 79,4 |
| 6,6 | 12,7 | 1,8 | 9,4 | 76,1 |
| 9,8 | 11,6 | 1,6 | 14,4 | 72,4 |
| 13,1 | 11 | 1,5 | 17,8 | 69,7 |
| 16,4 | 9,8 | 1,5 | 20,6 | 68,1 |

Die Oberflächenmorphologie einer elektrochemisch präparierten TiO₂-RuO₂-SnO₂-Probe ist in Figur 13 als REM-Aufnahme gezeigt. Auch hier zeigt sich wie in Beispiel 1a (Figur 1) die Mud-Cracked-Oberfläche in Kombination mit den kugelartigen Strukturen.

## Patentansprüche

1. Katalysatorbeschichtung mit elektrokatalytisch aktiven Komponenten auf Basis von Rutheniumoxid und Titanoxid und gegebenenfalls einem oder mehreren metallischen Dotierungselementen insbesondere aus der Reihe der Übergangsmetalle, wobei die Komponenten Rutheniumoxid und Titanoxid vorwiegend als RuO₂ und TiO₂ in Rutilform vorliegen, **dadurch gekennzeichnet, dass** das RuO₂ und TiO₂ überwiegend als Mischoxidphase vorliegen, insbesondere erkennbar an einer Verschiebung des Röntgenbeugungsreflexes von 27,477° (2 Theta Wert der reinen TiO₂ Rutilphase im Beugungsspektrum Cu Kₐₗₚₕₐ) zu einem Winkel von wenigstens 27,54°.

2. Katalysatorbeschichtung nach Anspruch 1, **dadurch gekennzeichnet, dass** die Dotierungselemente ausgewählt sind aus der Reihe: Iridium, Zinn, Antimon und Mangan, bevorzugt Iridium, wobei der Anteil an Dotierungselementen bevorzugt bis zu 20 mol-% beträgt.

3. Katalysatorbeschichtung nach einem der Ansprüche 1 oder 2, **dadurch gekennzeichnet, dass** der Anteil an Ruthenium in der Gesamtmenge an Metallen in der katalytisch aktiven Komponente 10 bis 21 mol-% beträgt.

4. Katalysatorbeschichtung nach einem der Ansprüche 1 bis 3, **dadurch gekennzeichnet, dass** wenigstens 75 Gew.-% des RuO₂ und TiO₂ als Mischoxidphase vorliegen.

5. Verfahren zur elektrochemischen Herstellung einer Katalysatorbeschichtung mit elektrokatalytisch aktiven Komponenten auf Basis von Rutheniumoxid und Titanoxid und gegebenenfalls einem oder mehreren metallischen Dotierungselementen, insbesondere aus der Reihe der Übergangsmetalle, wobei die Katalysatorbeschichtung auf ein elektrisch leitfähiges Trägermaterial aufgebracht wird, **dadurch gekennzeichnet, dass**
a) die Schicht mittels eines elektrochemischen Verfahrens über die Fällung von Ru und Ti aus einer mindestens Ru- und Titansalze enthaltenden, sauren wässrigen Lösung als Hydroxovorstufen auf den Träger gebracht wird, wobei der Träger als Kathode geschaltet ist,
b) die entstandene Hydroxoverbindungen enthaltende Schicht anschließend einer thermischen Behandlung bei einer Temperatur von mindestens 300°C bevorzugt mindestens 400°C, unter Bildung der Katalysatorbeschichtung unterzogen wird.

6. Verfahren gemäß Anspruch 5, **dadurch gekennzeichnet, dass** der Träger auf metallischem Titan oder Tantal, bevorzugt auf Titan basiert.

7. Verfahren gemäß einem der Ansprüche 5 oder 6, **dadurch gekennzeichnet, dass** die Salzlösung in der Stufe a) einen pH von höchstens 3,5 aufweist.

8. Verfahren gemäß einem der Ansprüche 5 oder 6, **dadurch gekennzeichnet, dass** die Salzlösung in der Stufe a) mittels verdünnter Salzsäure sauer gehalten wird.

9. Verfahren gemäß einem der Ansprüche 5 bis 8, **dadurch gekennzeichnet, dass** als Lösungsmittel für die Salzlösung in der Stufe a) eine Mischung von Wasser mit einem niederen Alkohol, insbesondere mit Isopropanol verwendet wird.

10. Verfahren gemäß einem der Ansprüche 5 bis 9, **dadurch gekennzeichnet, dass** bei der Abscheidung gemäß der Stufe a) eine Stromdichte (Absolutwert) von mindestens 30 mA/cm² eingehalten wird.

11. Verfahren gemäß einem der Ansprüche 5 bis 10, **dadurch gekennzeichnet, dass** die Salzlösung in der Stufe a) auf einer Temperatur von höchstens 20°C, bevorzugt höchstens 10°C, besonders bevorzugt höchstens 5°C gehalten wird.

12. Verfahren gemäß einem der Ansprüche 5 bis 11, **dadurch gekennzeichnet, dass** die Fällung der Hydroxovorstufen der Metalloxide durch lokale Basenbildung an der Elektrodenoberfläche erfolgt.

13. Verfahren gemäß einem der Ansprüche 5 bis 12, **dadurch gekennzeichnet, dass** die Temperung in Schritt b) über mindestens 10 Min. erfolgt.

14. Elektrode aufweisend eine Katalysatorbeschichtung gemäß einem der der Ansprüche 1 bis 4.

15. Elektrode gemäß Anspruch 14, beschichtet mit einer Katalysatorbeschichtung nach einem Verfahren gemäß einem der Ansprüche 5 bis 13.

16. Verwendung der Elektrode gemäß einem der Ansprüche 14 oder 15 zur elektrochemischen Herstellung von Chlor aus Chlorwasserstoff- oder Alkalichloridlösungen, insbesondere aus Kochsalzlösungen.
